# EUROPEAN PATENT APPLICATION

(11) **EP 4 471 692 A1**
(43) Date of publication of application: **04.12.2024**
(21) Application number: 23176788.0
(22) Date of filing: 01.06.2023
(51) Int. Cl.: G06Q 10/0639, G09B 5/00, G06Q 10/0633, G06Q 50/20, G06Q 50/30, G09B 3/00, G09B 9/10

(54) **METHOD FOR ASSISTING A TRAINEE DURING A PILOT TRAINING ON A PILOT TRAINING SIMULATOR, DATA PROCESSING APPARATUS, A PILOT TRAINING SIMULATOR AND A COMPUTER PROGRAM**

(71) Applicant: Airbus S.A.S., 31700 Blagnac (FR)
(72) Inventor: Comin, Alberto, 82024Taufkirchen (IT); Sciammetta, Nunzio, 82024Taufkirchen (IT)
(74) Representative: OTN Airbus SAS

(57) **Abstract**

The present invention provides a method for assisting a trainee during a pilot training on a pilot training simulator, comprising receiving (S10) a vocal input message from the trainee; converting (S11) the vocal input message into a text input message; processing (S12) the text input message by a neural network configured as a large language model, LLM, to identify the content of the text input message and extract at least a request related to the pilot training simulator; accessing and searching (S13) a database based on the request to determine an educational advice using the neural network, wherein the database includes data about an aircraft on which the pilot training is performed; generating (S14) a response message containing the educational advice using the neural network; converting (S15) the response message into a vocal response message; and providing (S16) the vocal response message to the trainee. Further, the present invention provides a corresponding data processing apparatus (2), a pilot training simulator (1) comprising the data processing apparatus and a computer program.

## Description

The invention relates to a device as well as to a method for assisting a trainee during a pilot training on a pilot training simulator. The invention is furthermore concerned with a corresponding data processing apparatus, a pilot training simulator and a computer program.

Typical pilot training systems aim for replicating the cockpit of a commercial aircraft or military fighter. In these pilot training systems, the replicated cockpit provides the pilot with a similar look as in the real aircraft, and it further provides a trainee the feeling of being in the real aircraft. Virtual displays provide a virtual representation of how the external view would be based on the action performed by the pilot. Typically a trainer, who is a person having vast flight experience and detailed knowledge about the aircraft explains the pilot how to control the aircraft and perform specific actions. These explanations may relate to e.g. how to interact with the cockpit, how to select a waypoint and introduce the waypoint in the flight path.

The problem of the present invention is to provide an improved way to perform pilot training on a pilot training system.

According to the invention, this problem is solved in each case by the subject matters of the independent claims.

According to a first aspect of the invention, a method for assisting a trainee during a pilot training on a pilot training simulator is provided. The method comprises receiving a vocal input message from the trainee, converting the vocal input message into a text input message, processing the text input message a neural network configured as a large language model, LLM, to identify the content of the text input message and extract at least a request related to the pilot training simulator, accessing and searching a database based on the request to determine an educational advice, wherein the database includes data about an aircraft on which the pilot training is performed, generating a response message containing the educational advice using the neural network, converting the response message into a vocal response message, and providing the vocal response message to the trainee.

According to a second aspect of the invention, a data processing apparatus is provided. The data processing apparatus comprises an input terminal, a data storage comprising a database, and a processor configured to perform the method according to any of the preceding claims.

According to a fourth aspect of the invention, a pilot training simulator, comprising the inventive data processing apparatus.

According to a fourth aspect of the invention, a computer program is provided. The computer program comprises instructions, which, when the program is executed by a computer, causes the computer to carry out the method of any of the preceding claims.

A fundamental concept of the invention is to provide assistance to the trainee during the pilot training in the simulator. The assistance is provided by vocal advice generated from an artificial intelligence. The artificial intelligence is trained about the pilot training simulator and the pilot training so that it can provide helpful advice that matches the actual flight training of the trainee on the simulator. For this, the trainee inputs a vocal input message or a prompt in order to receive educational advice in the form of a response from the artificial intelligence, Al. The artificial intelligence providing the trainee with advice is thus configured as a virtual training assistant.

A particular advantage of the solution according to an aspect of the invention is that it relieves the requirements for training new pilots. In particular, Al can replace the human trainer in answering questions. The method focuses on providing guidance where the trainee needs it. An aircraft manual could be directly replaced by the virtual training assistant or a corresponding computer or data processing apparatus performing the inventive method. This reduces the risk of mistakes and wrong information transferred by humans from the aircraft manual. The method can also be implemented in a metaverse training system, which does not need a physical pilot training simulator anymore.

The trainee is being trained to become a pilot on the pilot training simulator, which simulates at least one type of aircraft. The pilot training simulator simulates the cockpit including buttons, displays, flight control sticks etc.. The corresponding data processing apparatus including the virtual training assistant is integrated into the pilot training simulator so it can act as a training assistant based on artificial intelligence. It regularly monitors the actions of the trainee and is accessible for any prompts.

The artificial intelligence is configured as a neural network, more precisely as a large language model, LLM, which has been trained with a large number of language pieces. The LLM is thus capable of natural language processing and understands and correspondingly processes human language. The same neural network or a different algorithm is able to access and search a database related to the pilot training simulator.

Advantageous embodiments and further developments emerge from the description with reference to the figures.

According to some aspects of the method according to the invention, the method further comprises monitoring the trainee during the pilot training to identify a current action, and accessing and searching the database to determine a best action based on the identified current action of the trainee and relevant information from the database. This step may be done by the same neural network or by a different algorithm, such as a different neural network. The database includes past trainee data and may be trained with related information about avionics, the pilot training sytem etc.. Then, by accessing and searching the database, a predicted action is determined based on the identified current action of the trainee and past trainee data using the neural network. Subsequently, it is evaluated whether to perform a corrective action based on a comparison of the best action and the predicted action. The evaluation and comparison may be performed by the same neural network, a different neural network or a classical algorithm. Depending on the current situation in the pilot training, there may be only a finite number of possible actions the trainee may perform. These actions may be mapped in a vector space and the neural network is able to determine a best or optimum action at the current situation. However, based on past experience with trainees, which may include the actual trainee, a predicted action of the trainee may considerably differ from the best action. The evaluation of whether a corrective action is necessary may be performed using a separate neural network trained with avionics and flight situations. In that situation, the method provides a corrective action, which may e.g. be lifting the aircraft on the pilot training simulator in order to prevent an uncontrolled descent of the aircraft. In this way, guidance can be provided by the method in a more suitable and reliable way.

According to some further aspects of the method according to the invention, determining the predicted action includes predicting a token based on the vocal input message using the neural network. By considering tokens, such as for example syllables of the spoken words or expressions that are often used in the vocal input message, the predicted action can be determined in a more accurate and reliable way.

According to some further aspects of the method according to the invention, monitoring the trainee is performed in real-time. Alternatively or in addition, the step of comparing the current action with a command history recorded by the pilot training simulator is conducted. The commands are based on the actions performed by a trainee and have been stored on the computer integrated in the pilot training simulator. The actions of the trainee and the progress in the pilot training can thus be constantly monitored and may be compared to past actions of the same trainee or a different trainee. In this way, educational advice can be provided depending on a current or past action of the trainee. The educational advice is thus provided in a more accurate way.

According to some further aspects of the method according to the invention, the request is related to at least one of an aircraft control element, a flight operation of the aircraft, an activation or deactivation of a component of the simulated aircraft on the pilot training simulator. These elements represent part of the pilot training, about which the trainee should be provided with related educational advice.

According to some further aspects of the method according to the invention, the neural network is trained at least with information about the simulated aircraft on the pilot training simulator. In this way, the neural network can be updated by simple training when new material is available or when a change of the avionics requires it.

According to some further aspects of the method according to the invention, the neural network preferably is configured as Generative Pretrained Transformer, GPT, or as a generative artificial intelligence. These represent suitable algorithms for the task in that these neural networks can be trained and fine-tuned on pilot training and the training simulator.

According to some further aspects of the method according to the invention, the method further comprises the step of receiving a current system status of the pilot training simulator. The current status of the pilot training simulator can be e.g. a flight phase such as a take-off or landing procedure, or a situation in which the simulated aircraft has entered a zone of heavy turbulence etc.. Searching the database is then based on the current system status to provide optimum educational advice by the neural network.

According to some further aspects of the method according to the invention, the method further comprises the step of applying reinforcement learning to the neural network comprising a policy, which is based on the current system status. This represents an alternative or additional way with respect to active training of the neural network with training data to improve the neural network. This may in particular be applied to determine the best action.

According to some further aspects of the method according to the invention, the method further comprises extracting an implicit request from the text input message using the neural network and supplying the implicit request to the request of the text input message before accessing and searching the database to determine a response to the input message. In this way, the method provides a means for setting the content of the text input message into a correct context. In this step, the neural network may also include accessing the database for collecting additional information with respect to a particular situation or status of the pilot training simulator. In this way, the requirement for the trainee to formulate a valid request is relieved.

According to some further aspects of the method according to the invention, the method further comprises determining a stress level of the trainee based on the vocal input message using the neural network. Generating the response message then includes generating the response message based on the stress level of the trainee. By this "sentimental analysis", the response message can be set into a suitable "sentimental" context. For example, the response message may be short in case of a high stress level, because it is hard for the trainee to concentrate on a longer response message in the actual state of the training. In case of low stress, in which the trainee can concentrate longer on the response message, it may provide more detailed information.

According to some further aspects of the method according to the invention, determining the stress level is based on the implicit request extracted from the text input message. In this way, the neural network discovers signs of unexpressed stress or difficulty of the training, which may be addressed e.g. by taking corrective actions or by giving additional educational advice.

According to some further aspects of the method according to the invention, the natural language processing is configured as at least one of a large language model, LLM, Generative Pretrained Transformer, GPT, a generative artificial intelligence, a supervised language model. These models represent a suitable set for addressing the technical problem. These models may also be fine-tuned in automation technology for more accuracy of the responses.

The above embodiments and further developments can be combined with each other as desired, if useful. In particular, all features of the method for assisting a trainee during a pilot training on a pilot training simulator are transferable to the data processing apparatus, the pilot training simulator and/or the computer program, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

The present invention is explained more specifically below on the basis of the exemplary embodiments indicated in the schematic figures, in which:
- Fig. 1: shows a flow chart for a method for assisting a trainee during a pilot training on a pilot training simulator according to an embodiment of the invention;
- Fig. 2: shows a flow diagram of a method for assisting a trainee during a pilot training on a pilot training simulator according to a further embodiment of the invention; and
- Fig. 3: shows a pilot training simulator comprising a data processing apparatus according to an embodiment of the invention;

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

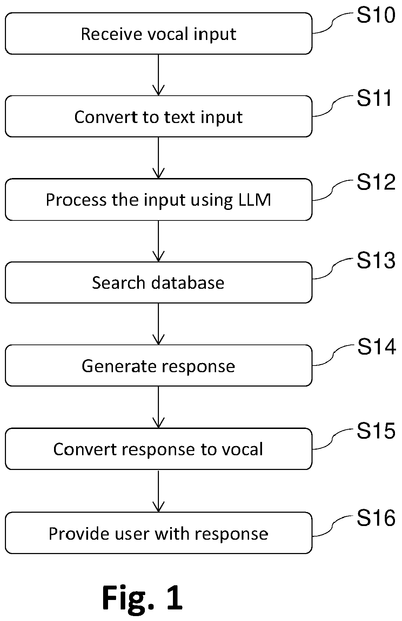

Fig. 1 shows a flow chart for a method for assisting a trainee during a pilot training on a pilot training simulator according to an embodiment of the invention.

The method for assisting a trainee during a pilot training on a pilot training simulator shown in Fig. 1 comprises:
At first, a vocal input message is received S10 from the trainee. This may be a prompt of the trainee during the pilot training and be recorded by a microphone connected to a computer. The vocal input message is then converted S11 into a text input message. This can be performed by a vocal-to-text converter stored on the computer.

Then, processing S12 the text input message by a neural network to identify the content of the text input message and extract at least a request related to the pilot training simulator. The neural network is configured as a large language model, LLM, and has been trained with a vast number of language samples. The LLM is thus able to understand the application context within the content of the text input message and is able to understand the request of the trainee. The request may be related to an aircraft control element, a flight operation of the aircraft, an activation or a deactivation of a component of the simulated aircraft on the pilot training simulator, but not limited to the listed requests. In case the LLM does not understand the request, it might request the trainee to specify his request.

In this embodiment, the neural network is trained with further information about the simulated aircraft on the pilot training simulator. In this way, the neural network can be updated when new material or features of the aircraft are available.

The neural network is configured as a Generative Pretrained Transformer, GPT, or a generative artificial intelligence. These represent suitable algorithms for the task in that these neural networks can be trained and fine-tuned on pilot training and the training simulator.

Subsequently, a database is accessed and searched S13 based on the request to determine an educational advice. This step may be performed by the same neural network or by a different search algorithm, e.g. a different neural network or a classical search algorithm. The database includes data about an aircraft on which the pilot training is performed. By a search query, the neural network is able to identify related information in the database to identify a educational advice suitable to answer the request and potentially suitable for the trainee at the particular moment of the flight training.

In further embodiments, the neural network is fine-tuned in avionics to improve the understanding of the pilot training system the trainee is performing his pilot training. In this case, a step of accessing and searching S13 the database may become redundant.

Furthermore, the method includes the step of generating S14 a response message containing the educational advice using the neural network. In this step, the neural network makes use of its ability as LLM using natural language processing to formulate a suitable response message using natural language processing. The response message is then converted S15 into a vocal response message. This can be done by a text-to-vocal interpreter. As final step in this embodiment, the vocal response message is provided S16 to the trainee is provided. This can be performed by e.g. a loud speaker.

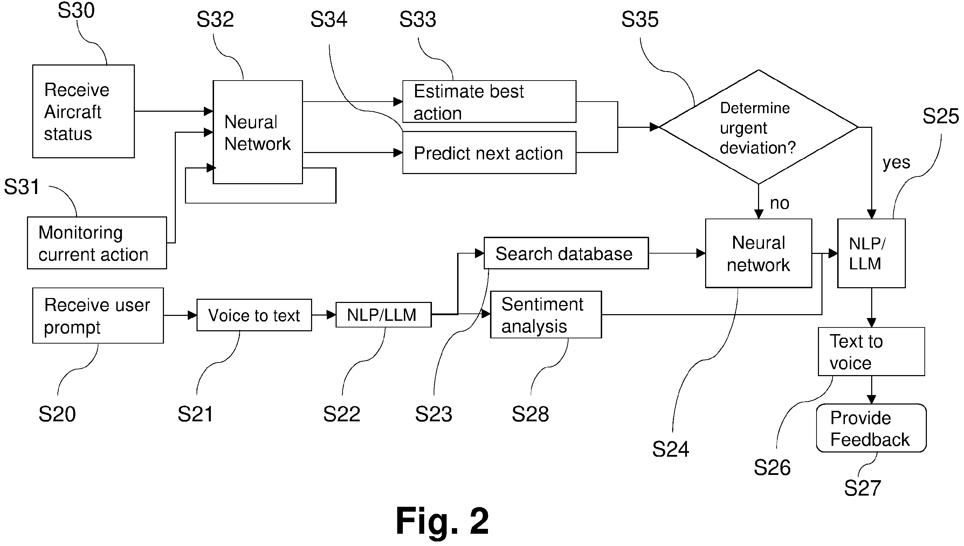

Fig. 2 shows a flow diagram of a method for assisting a trainee during a pilot training on a pilot training simulator according to a further embodiment of the invention.

The method shown in Fig. 2 is based on the method as described previously with reference to Fig. 1. In this respect, steps S20 to S24 and S26 to S27 essentially correspond to steps S10 to S16 as described in the previous embodiment. Step S25 represents an additional step, in which a corrective action is added to the response message using the neural network and is described below.

Fig. 2 shows the additional step that is named "sentiment analysis" of determining S28 a stress level of the trainee based on the vocal input message using the neural network. The response message is generated S25 based on the stress level of the trainee. Depending on the stress level, the response message can be set into a suitable "sentimental" context. In this embodiment, the response message may be short in case of a high stress level, because it is hard for the trainee to concentrate on a longer response message in the actual state of the training. In a state of low stress, in which the trainee can concentrate longer on the response message, the response message contains more detailed information.

In further embodiments, an implicit request is extracted from the text input message using the neural network. The implicit request is then provided to the request of the text input message before accessing and searching the database to determine a response to the input message. These additional steps provide a means for setting the content of the text input message into a correct context using information the trainee has not explicitly expressed. In further embodiments, the database may be accessed for collecting additional information with respect to a particular situation or status of the pilot training simulator, e.g. using the same or a different neural network. In some of these embodiments, the step of determining S28 the stress level may be based on the implicit request extracted from the text input message in order to detect signs of stress or difficulty from the trainee. The neural network may then take into account the stress level and formulate the response message with an adapted tone and verbosity.

In the embodiment shown in Fig. 2, the trainee is monitored S31 during the pilot training to identify a current action of the trainee. In this embodiment, the trainee is monitored S31 in real-time. In further embodiments, the current actions of the trainee are compared and analyzed by using a command history recorded by the pilot training simulator. In addition, the method also provides receiving S30 a current system status of the aircraft simulated by the pilot training simulator 1, wherein searching the database is based on the current system status.

The received information in steps S30 and S31 are then input into the neural network and in step S32, the neural network is trained on the new situation. In further embodiments, the neural network may further apply reinforcement learning comprising a policy, which is based on the current system status.

The database is accessed and searched S33 to determine a best action based on the identified current action of the trainee and relevant information from the database. This may be performed by the same neural network or a different algorithm, e.g. a different neural network. In this embodiment, the best action is determined by supervised learning. In further embodiments, reinforcement learning is applied to determine the best action.

In addition, the database is accessed and searched S34 to determine a predicted action based on the identified current action of the trainee and past trainee data, wherein the database includes the past trainee data using the neural network. The predicted action is the action that the trainee is most likely to perform. Furthermore, a token is predicted based on the vocal input message using the neural network in order to increase the accuracy of the predicted action. A token may be a syllable of words spoken by the trainee or certain expressions the trainee is often using.

The method then evaluates S35 whether to perform a corrective action based on a comparison of the best action and the predicted action. In this embodiment, the evaluation and comparison is performed by the same neural network. In further embodiments, a separate neural network trained with avionics and flight situations may perform this task. Depending on the situation, the neural network may perform a corrective action or may advise the trainee about such corrective action due to the difference between the best action and the predicted action. If there is a need for a corrective action, related information about corrective action is then provided to the neural network at step S25, when the neural network is generating the response message including the educational advice. By using natural language processing based on the large language model, the information about corrective action is then added and merged to the response message at step S25. Otherwise a brief feedback is provided that no corrective action is necessary.

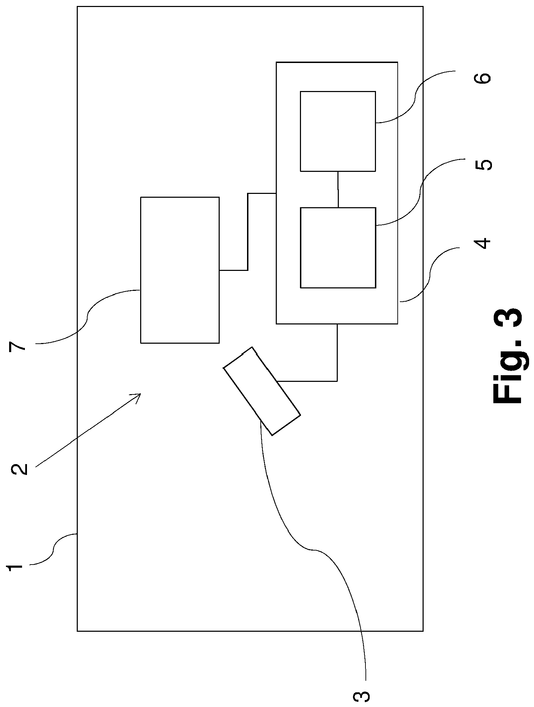

Fig. 3 shows a pilot training simulator comprising a data processing apparatus according to an embodiment of the invention.

Fig. 3 shows a pilot training simulator 1, comprising the data processing apparatus 2. The data processing apparatus 2 comprises an input terminal 3, which is configured as a microphone, by which the vocal input message can be received. The data processing apparatus 2 comprises a speaker 7 through which the vocal response message is provided to the trainee. The data processing apparatus 2 comprises a computer housing 4, which includes a processor 5 and a data storage 6. The processor 5 is configured to perform the method as described above with reference to Fig. 1 and 2 using the data storage 6, which includes the database and program code for the neural network as described above with reference to Fig. 1 and 2. The data storage 6 thus contains a computer program comprising instructions, which, when the program is executed by a computer, cause the computer to carry out the method as described above with reference to Fig. 1 and 2. In further embodiments, the processor 5 can access a cloud (not shown in Fig. 3) with additional information about the pilot training simulator, such as e.g. an aircraft or a component of the aircraft the pilot training simulator is simulating.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### List of reference signs

- 1: pilot training simulator
- 2: data processing apparatus
- 3: input terminal
- 4: computer housing
- 5: processor
- 6: data storage
- 7: speaker
- S10-S16: method steps
- S20-S28: method steps
- S30-S35: method steps

## Claims

1. Method for assisting a trainee during a pilot training on a pilot training simulator, comprising:
receiving (S10) a vocal input message from the trainee;
converting (S11) the vocal input message into a text input message;
processing (S12) the text input message by a neural network configured as a large language model, LLM, to identify the content of the text input message and extract at least a request related to the pilot training simulator;
accessing and searching (S13) a database based on the request to determine an educational advice, wherein the database includes data about an aircraft on which the pilot training is performed;
generating (S14) a response message containing the educational advice using the neural network;
converting (S15) the response message into a vocal response message; and
providing (S16) the vocal response message to the trainee.

2. Method according to claim 1, further comprising:
monitoring (S31) the trainee during the pilot training to identify a current action;
accessing and searching the database (S33) to determine a best action based on the identified current action of the trainee and relevant information from the database;
accessing and searching (S34) the database to determine a predicted action based on the identified current action of the trainee and past trainee data, wherein the database includes the past trainee data using the neural network; and
evaluating (S35) whether to perform a corrective action based on a comparison of the best action and the predicted action.

3. Method according to claim 2, wherein determining the predicted action includes predicting a token based on the vocal input message using the neural network.

4. Method according to claim 2 or 3, wherein monitoring the trainee is performed in real-time, and/or further comprising the step of comparing the current action with a command history recorded by the pilot training simulator.

5. Method according to any of the preceding claims, wherein the request is related to at least one of an aircraft control element, a flight operation of the aircraft, an activation or a deactivation of a component of the simulated aircraft on the pilot training simulator.

6. Method according to any of the preceding claims, wherein the neural network is trained at least with information about the simulated aircraft on the pilot training simulator.

7. Method according to any of the preceding claims, wherein the neural network is configured as a Generative Pretrained Transformer, GPT, or a generative artificial intelligence.

8. Method according to any of the preceding claims, further comprising:
receiving a current system status of the pilot training simulator,
wherein searching the database is based on the current system status.

9. Method according to claim 8, further comprising:
applying reinforcement learning to the neural network comprising a policy, which is based on the current system status.

10. Method according to any of the preceding claims, further comprising:
extracting an implicit request from the text input message using the neural network; and
supplying the implicit request to the request of the text input message before accessing and searching the database to determine a response to the input message.

11. Method according to any of the preceding claims, further comprising:
determining (S28) a stress level of the trainee based on the vocal input message using the neural network,
wherein generating the response message includes generating the response message based on the stress level of the trainee.

12. Method according to claim 9 and 10, wherein determining (S28) the stress level is based on the implicit request extracted from the text input message.

13. Data processing apparatus (2) comprising an input terminal (3), a speaker, a data storage (6) comprising a database, and a processor (5) configured to perform the method according to any of the preceding claims.

14. Pilot training simulator (1), comprising the data processing apparatus according to claim 13.

15. Computer program comprising instructions, which, when the program is executed by a computer, causes the computer to carry out the method of any of the preceding claims.
